# EUROPÄISCHE PATENTSCHRIFT

(11) **EP 3 034 406 B1**
(45) Veröffentlichungstag und Bekanntmachung des Hinweises auf die Patenterteilung: **07.02.2018**
(21) Anmeldenummer: 15200309.1
(22) Anmeldetag: 16.12.2015
(51) Int. Cl.: B64D 17/02, B64D 17/34

(54) **TRAGESYSTEM ZUR DURCHFÜHRUNG VON ABFANGMANÖVERN EINES LASTENGLEITSCHIRMS UND VERFAHREN ZUM VERSTELLEN DER HINTERKANTE EINES LASTENGLEITSCHIRMS**
CARRIER SYSTEM FOR PERFORMING RETENTION MANEUVERS OF A LOAD PARAGLIDER AND METHOD FOR ADJUSTING THE TRAILING EDGE OF A LOAD PARAGLIDER
SYSTEME DE SUPPORT DESTINE A EXECUTER DES MANOEUVRES D'ARRONDI D'UN PARACHUTE DE LARGAGE ET PROCEDE DE REGLAGE DE L'ARETE ARRIERE D'UN PARACHUTE DE LARGAGE

(30) Priorität: 18.12.2014 DE 102014018702
(43) Veröffentlichungstag der Anmeldung: 22.06.2016
(73) Patentinhaber: Airbus Defence and Space GmbH, 85521 Ottobrunn (DE)
(72) Erfinder: BIEHL, Jukka, 85053 Ingolstadt (DE)
(74) Vertreter: Isarpatent

(56) Entgegenhaltungen:
- EP-A1- 1 396 426
- DE-A1- 19 610 052
- DE-A1- 19 634 017
- DE-C1- 19 960 332
- JP-A- 2008 114 763

## Beschreibung

Verschiedene Ausführungsformen betreffen allgemein ein Tragesystem zur Durchführung von Abfangmanövern eines Lastengleitschirms und ein Verfahren zum Verstellen der Hinterkante eines Lastengleitschirms zur Durchführung von Abfangmanövern.

Die Entgegenhaltung DE 196 34 017 A1 beschreibt ein System, in welchem die Tragleinen des Schirmbereichs vor der Hinterkante in einer Schlaufe zusammengefasst sind und durch Verkürzungselemente überbrückt werden, während die Hinterkante von einer gesonderten Leine gehalten wird. Die Verkürzungselemente werden zu einem vorbestimmten Zeitpunkt von einer Trennvorrichtung durchschnitten, wodurch sich die Tragleinen auf ihre nominelle Länge erstrecken können und die Hinterkante gegenüber dem vorderen Bereich des Schirms zur Auftriebserhöhung und Abbremsung nach unten gezogen wird.

Weitere Tragesysteme zur Durchführung von Abfangmanövern eines Lastengleitschirms sind beispielsweise aus DE 102 41 585 oder DE 199 60 332 bekannt.

Derartige Lastengleitschirme können zum Absetzen von Lasten beispielsweise aus Flugzeugen oder zum Landen von Fluggeräten oder Luftfahrzeugen, die bemannt oder unbemannt sein können, vorgesehen sein. Bei Gleitschirmen, die verhältnismäßig schwere Lasten beispielsweise mit einem Gewicht von mehreren
hundert Kilogramm bis mehreren Tonnen tragen, treten dabei verhältnismäßig große Steuerkräfte und verhältnismäßig lange Steuerwege bei den Stellorganen auf. Die zur Steuerung derartiger Lastengleitschirme nach dem Stand der Technik vorgesehenen Stellantriebe sind Steuereinheiten mit elektrischen Motoren und Seilwinden, die in der Regel von einer Batterie gespeist werden. Ein Nachteil der hierfür vorgesehenen Stellantriebssysteme ist, dass sie nur eine begrenzte Leistung und Kraft zur Steuerung des Gleitschirms aufbringen. Ein weiterer Nachteil des Lastengleitschirms mit diesen Steuer- bzw. Stellantriebseinrichtungen ist, dass letztere einen relativ großen Anteil am Gesamtgewicht des Gesamtsystems aus Lastengleitschirm und Steuer-/ Stellantriebseinrichtung haben, so dass die vom Lastengleitschirm tragbare Nutzlast reduziert wird bzw. der Lastengleitschirm in relativ großen Dimensionen ausgeführt sein muss. Ein weiterer Nachteil von Lastengleitschirmen nach dem Stand der Technik liegt auch darin, dass die verwendeten Steuer-/ Stellantriebseinrichtungen relativ teuer sind. Dies ist insbesondere deshalb von Nachteil, da das Gesamtsystem im militärischen Einsatz nicht geborgen wird bzw. nicht geborgen werden kann. Ein weiterer Nachteil bekannter Lastengleitschirmsysteme ist, dass der Energiespeicher mit der Batterie nur eine begrenzte Kapazität aufweist, wodurch ein weiches, bzw. sicheres Landen ohne Beschädigung der Lasten in vielen Fällen nicht möglich sein kann. Während des Landeanfluges sind zum sicheren Landen der Lasten vielfache Betätigungen der Steuer-/ Stellantriebseinrichtung nötig, die entsprechend Energie benötigen und als zusätzliches Gewicht, beispielsweise in Form von Batterien die zur Verfügung stehende Nutzlast einschränken.

Davon ausgehend ist es Aufgabe der Erfindung, ein Tragesystem zur Durchführung von Abfangmanövern eines Lastengleitschirms zur Verfügung zu stellen, bei dem das Abfangmanöver mit möglichst geringem Energieaufwand erfolgt.

Diese Aufgabe wird mit einem Tragesystem mit den Merkmalen des Anspruchs 1 sowie durch ein Verfahren mit den Merkmalen des Anspruchs 11 gelöst. Beispielhafte Ausführungsformen sind in den abhängigen Ansprüchen dargestellt. Es sei darauf hingewiesen, dass die Merkmale der Ausführungsbeispiele des Systems auch für Ausführungsformen des Verfahrens gelten und umgekehrt.

Erfindungsgemäß wird ein Tragesystem zur Durchführung von Abfangmanövern eines Lastengleitschirms mit einem Schirm mit Hinterkante zur Durchführung des Manövers verwendet, wobei an dieser mindestens eine Fangleine befestigt ist. Das Tragesystem weist mindestens eine Traglasteinheit auf, die über einen ersten kurzen Lasttragegurt und einen zweiten längeren Lasttragegurt mit dem Tragesystem verbunden ist. Das Tragen einer mit der Traglasteinheit verbundenen Traglast erfolgt über den ersten kurzen Lasttragegurt. Das Verstellen der Hinterkante zur Durchführung des Manövers erfolgt durch die Massenkraft der Traglast, indem eine Trennung oder Abtrennung des ersten kurzen Lasttragegurts erfolgt und das Tragen der Traglast über den längeren zweiten Lasttragegurt erfolgt.

Der Gleitschirm kann beispielsweise ein Flächengleitschirm oder ein vergleichbarer Schirm sein, der Vorrichtungen zum Durchführen eines Abfangmanövers aufweist. Der Gleitschirm weist eine verstellbare Hinterkante oder Hinterkantenklappe auf, mit deren Hilfe ein Abfangmanöver oder Flaremanöver, auch kurz Flare genannt, durchgeführt werden kann. Als Flare wird ein Auftrieb erzeugendes Bremsen bei der Landung eines Flächenfallschirmes oder eine Landebremsung bezeichnet. Bei einem dynamischen Flare wird/werden die zur Hinterkante des Gleitfallschirms führende/führenden Fangleine oder die Fangleinen, auch Flareleinen genannt, innerhalb weniger Zehntelsekunden eingezogen. Durch das so schlagartig veränderte Profil des Gleitschirms bzw. der Kappe nehmen Vertikal- und Horizontalgeschwindigkeit deutlich ab. Hierbei wird ein Teil der Hinterkante, vorzugsweise wird symmetrisch ein oder mehrere Abschnitte der Hinterkante auf der rechten und linken Seite der Hinterkante, oder auch die gesamte Hinterkante verstellt. Die für dieses Manöver benötigte Leistung wird im Wesentlichen durch Ablassen der an dem Tragesystem befestigten Traglast bzw. Nutzlast erreicht. Bei dem vorliegenden Tragesystem werden zwei verschieden lange Gurtsätze, ein erster kurzer Lasttragegurt und ein zweiter längerer Lasttragegurt, verwendet. Beim Auslösen des Flares wird der erste kürzere Lasttragegurt getrennt, d.h. die Verbindung zwischen dem Tragesystem und der Traglasteinheit, die zuvor durch den ersten kurzen Lasttragegurt vorhanden war, wird durchtrennt bzw. getrennt, und die Traglast fällt soweit "frei", bis diese von dem zweiten, längeren Lasttragegurt abgefangen wird. Die Fangleine oder Fangleinen, bzw. Flareleinen, des Schirms ist/sind an einer Traglasteinheit befestigt, an der auch die beiden Traglastgurte aus dem Tragesystem befestigt sind.

Gemäß einer Ausführungsform ist durch die Trennung des ersten kurzen Lasttragegurts der Abstand zwischen dem Tragesystem und der Traglasteinheit auf die Länge des zweiten längeren Lasttragegurts vergrößert. Durch die Trennung des ersten Lasttragegurts wird die Fangleine, bzw. Flareleine "eingezogen", d.h. auf die Fangleine wird eine Zugkraft durch die Traglast ausgeübt, die für die notwendige Verstellung an der Hinterkante des Gleitschirms sorgt.

Gemäß einer Ausführungsform verläuft die Fangleine über mindestens eine Umlenkung an der Traglasteinheit. Durch eine Umlenkung an der Traglasteinheit kann der Weg, der durch das Ablassen der Traglast von dem ersten Lasttragegurt auf den zweiten längeren Lasttragegurt erreicht wird, weiter vergrößert werden. Durch eine Umlenkung an der Traglasteinheit kann der Weg beispielsweise verdoppelt werden, wenn die Fangleine an dem Tragesystem befestigt ist und über eine Umlenkung an der Traglasteinheit geleitet ist.

Gemäß einer Ausführungsform verläuft die Fangleine über mindestens eine Umlenkung an dem Tragesystem. Durch eine Umlenkung an dem Tragesystem kann der Weg, der durch das Ablassen der Traglast von dem ersten Lasttragegurt auf den zweiten längeren Lasttragegurt erreicht wird, weiter vergrößert werden. Durch die Kombination einer oder mehrerer Umlenkungen an dem Tragesystem und einer oder mehrerer Umlenkungen an der Traglasteinheit kann beispielsweise die Länge der Fangleine, bzw. Flareleine, die durch das Absenken der Traglast auf den längeren zweiten Lasttragegurt "eingezogen" wird, beispielsweise vervielfacht werden. Mehrere Umlenkungen können nach dem Prinzip eines Flaschenzugs eine entsprechende Übersetzung bereitstellen. Die Verwendung von einer oder mehreren Umlenkungen ist insbesondere beim Absetzen schwerer Traglasten von Vorteil, da dadurch die Höhe des freien Falls, von der Durchtrennung des ersten Lasttragegurts bis zum Tragen über den längeren zweiten Lasttragegurt verringert werden kann und die Belastungen auf die Lasttragegurte dadurch verringert wird.

Gemäß einer Ausführungsform erfolgt die Trennung des ersten kurzen Lasttragegurts mittels einer gesteuerten Trennvorrichtung. Um den Flare auszulösen, ist es vorteilhaft, wenn der erste kurze Lasttragegurt schnell und sicher getrennt wird. Der erste kurze Lasttragegurt trägt bis zum Zeitpunkt der Trennung die gesamte Traglast und ist dadurch einer entsprechenden Belastung ausgesetzt. Sobald die gewünschte Höhe zur Durchführung des Flares erreicht ist, trennt bzw. durchtrennt eine gesteuerte Trennvorrichtung den ersten Lasttragegurt, oder beispielsweise Teile eines Mehrringsystems, mit dem beispielsweise zwei Abschnitte bzw. Hälften des ersten Lasttragegurts verbunden sind.

Gemäß einer Ausführungsform ist die Trennvorrichtung ein Cutter. Die Trennung bzw. Durchtrennung des ersten Lasttragegurts, oder beispielsweise Teile eines Mehrringsystems, mit dem zwei Abschnitte bzw. Hälften des ersten Lasttragegurts verbunden sind, kann beispielsweise durch einen sogenannten Cutter erfolgen. Ein Cutter ist ein pyrotechnisches Trennsystem. In einem Rohr oder einem entsprechenden Hohlraum, wird eine Treibladung gezündet und schießt einen Schneid- bzw. Trennbolzen gegen einen Anschlag, bzw. Amboss. Ein dazwischenliegender Gurt, bzw. ein Draht, ein Band, eine Leine oder ein Kabel wird so durchtrennt. Derartige Cutter weisen einen geringen Wartungsaufwand und eine sehr hohe Zuverlässigkeit auf. Darüber hinaus sind Cutter bekannt und werden hier nicht weiter beschrieben.

Gemäß einer Ausführungsform einer Ausführungsform weist der erste kurze Lasttragegurt ein Mehrringtrennsystem auf. Um eine Trennung des ersten Lasttragegurts zu erreichen, weist der erste Lasttragegurt ein Mehrringtrennsystem auf. Hierbei sind zwei Teile des ersten Lasttragegurts mittels eines Mehrringtrennsystems verbunden. Soll der erste Lasttragegurt wie gewünscht durchtrennt werden, kann dies beispielsweise durch Öffnen des Mehrringtrennsystems erfolgen. Das Mehrringtrennsystem weist mehrere ineinandergreifende Ringe auf, wobei die Ringe unterschiedliche Größen aufweisen. Hierbei ist ein kleiner Ring durch einen großen Ring hindurchgeführt, wobei durch den kleineren Ring wiederum ein noch kleinerer Ring geführt ist. Derartige Mehrringsysteme sind darüber hinaus bekannt und werden hier nicht weiter beschrieben.

Gemäß einer Ausführungsform ist das Mehrringtrennsystem ein Dreiringsystem. Bei einem Dreiringsystem greifen drei Ringe ineinander, wobei durch die drei ineinandergreifenden Ringe, je nach Geometrie, Übersetzungsverhältnisse von etwa 1:100 erreichbar sind. Auf die Halterung des kleinsten Rings wirkt dadurch eine im Verhältnis zum gesamten Lasttragegurt sehr geringe Kraft.

Zur Öffnung des Mehrringtrennsystems bzw. Dreiringsystems ist ein haltendes Kabel, Draht oder eine ähnliche Vorrichtung zu entfernen, bzw. durch eine zuvor beschrieben Trennvorrichtung, beispielsweise einen Cutter, zu durchtrennen, wenn die gewünschte Flughöhe erreicht ist.

Gemäß einer Ausführungsform weist das Tragesystem mindestens eine Vorrichtung zur Durchführung von Kurvenflug-Manövern auf. Um den Lastgleitschirm zu einer gewünschten Landeposition zu manövrieren, weist das Tragesystem eine Vorrichtung auf, mit deren Hilfe die Steuerleinen des Gleitschirms beeinflusst werden können. Dies kann beispielsweise durch Aufrollen oder Abrollen der mit dem Gleitschirm verbundenen Steuerleinen erfolgen. Für die Bestimmung der Position kann das Tragesystem beispielsweise eine GPS-Positionsbestimmungsvorrichtung aufweisen.

Gemäß einer Ausführungsform weist das Tragesystem einen Höhensensor zur Messung der momentanen Flughöhe auf. Um das Abfangmanöver bzw. der Flare bei einer gewünschten Höhe auszulösen, weist das Tragesystem einen Höhensensor auf, der beispielsweise die Höhe über Grund misst. Bevorzugt misst der Höhensensor die Höhe der Unterseite der Traglast über Grund. Die Messung der Höhe kann beispielsweise mittels eines Laser-Höhenmessers erfolgen. Die Höhe der Unterseite der Traglast kann beispielsweise aus der momentanen Höhe des Laser-Höhenmessers über Grund abgeleitet sein. Um eine Störung durch die Traglast zu vermeiden erfolgt die Höhenmessung beispielsweise in einem Winkel der von der Senkrechten um einige Grad, beispielsweise zwischen 10 und 45 Grad abweicht. Bei Erreichen der gewünschten Sollhöhe wird beispielsweise ein Signal an die Trennvorrichtung übermittelt, um den ersten Lasttragegurt zu trennen.

Gemäß einer Ausführungsform weist das Tragesystem ein oder mehrere Traglasteinheiten auf, die jeweils mit dem Tragesystem über einen kurzen ersten Lasttragegurt und zumindest über einen zweiten längeren Lasttragegurt verbunden sind. Zur Durchführung des Abfangmanövers werden die ersten kurzen Lasttragegurte im Wesentlichen zeitgleich durchtrennt. Hierzu kann gemäß einer Ausführungsform jeder erste Lasttragegurt mit einer Trennvorrichtung versehen sein, die zeitgleich auslösen. Gemäß einer alternativen Ausführungsform können auch nur einer, zwei oder mehrere der ersten Lasttragegurte mit einer Trennvorrichtung versehen sein, die nahezu zeitgleich auslösen, wobei die weiteren Lasttragegurte mechanisch mit diesen ersten Lasttragegurten mit Trennvorrichtung verbunden sind. Beim Auslösen der Trennvorrichtungen erfolgt vorzugsweise zeitgleich eine Trennung der weiteren Lasttragegurte. Beispielsweise können die Dreiringsysteme über Kabel miteinander verbunden sein, so dass die Trennung durch die Trennvorrichtung nahezu zeitgleich das Öffnen der Dreiringsysteme der weiteren Lasttragegurt ermöglicht. Zum Verstellen der Hinterkante des Gleitschirms kann das Tragesystem eine oder mehrere Fangleinen, bzw. Flareleinen aufweisen, die jeweils mit einer Traglasteinheit verbunden sind. Bei einer Ausführungsform mit mehreren Traglasteinheiten können die Fangleinen, je nach Anzahl, mit einer, zwei, mehreren oder allen der Traglasteinheiten verbunden sein, wobei auch mehrere Fangleinen beispielsweise über eine Kaskade an einer oder mehreren Traglasteinheiten befestigt sein können. Durch das Trennen der ersten Lasttragegurte werden die mehreren Fangleinen nahezu gleichzeitig eingezogen um eine Verstellung des Profils des Gleitschirms durch Verstellung der Hinterkante des Gleitschirms zu erreichen.

Erfindungsgemäß wird weiter ein Verfahren zum Verstellen der Hinterkante eines Lastengleitschirms zur Durchführung eines Abfangmanövers verwendet, mit mindestens einer Traglasteinheit, die über einen ersten kurzen Lasttragegurt und einen zweiten längeren Lasttragegurt mit einem Tragesystem des Lastengleitschirms verbunden ist und wobei an diesem mindestens eine Fangleine des Lastengleitschirms befestigt ist. Das Verfahren weist die folgenden Schritte auf: Trennen des ersten kurzen Lasttragegurts; Verstellen der Hinterkante zur Durchführung des Manövers durch die Massenkraft der Traglast; und Tragen der Traglast über den längeren zweiten Lasttragegurt.

Gemäß einer Ausführungsform wird durch die Trennung des ersten kurzen Lasttragegurts der Abstand zwischen dem Tragesystem und der Traglasteinheit auf die Länge des zweiten längeren Lasttragegurts vergrößert.

Gemäß einer Ausführungsform verläuft die Fangleine über mindestens eine Umlenkung an der Traglasteinheit. Durch die Umlenkung der Fangleine kann mehr Fangleine beim Ablasen der Traglast auf den zweiten längeren Lasttragegurt "eingezogen" werden.

Gemäß einer Ausführungsform verläuft die Fangleine über mindestens eine Umlenkung an dem Tragesystem. Durch die Kombination von mehreren Umlenkungen an dem Tragesystem und der Traglasteinheit kann nach dem Prinzip des Flaschenzugs eine entsprechende Übersetzung erreicht und mehr Fangleine bei einer kurzen Falldistanz eingezogen werden.

Gemäß einer Ausführungsform wird der erste kurze Lasttragegurt mittels einer gesteuerten Trennvorrichtung getrennt. Die Trennvorrichtung wird vorzugsweise ausgelöst, wenn einen gewünschte Sollhöhe erreicht ist und der Gleitschirm für die Landung abgefangen werden soll.

In den Zeichnungen beziehen sich im Allgemeinen gleiche Bezugszeichen auf die gleichen Teile über die verschiedenen Ansichten hinweg. Die Zeichnungen sind nicht notwendigerweise maßstabsgetreu; Wert wird stattdessen im Allgemeinen auf die Veranschaulichung der Prinzipien der Erfindung gelegt. In der folgenden Beschreibung werden verschiedene Ausführungsformen der Erfindung beschrieben unter Bezugnahme auf die folgenden Zeichnungen, in denen:
- FIG. 1: einen Lastengleitschirm mit einer Ausführungsform des Tragesystems zeigt;
- FIG. 2: einen Ausschnitt einer Ausführungsform des Tragesystems zeigt;
- FIG. 3: einen Ausschnitt einer weiteren Ausführungsform des Tragesystems zeigt;
- FIG. 4: den Ablauf des Trennens eines Dreiringsystems zeigt; und
- FIG. 5: ein Ablaufdiagramm zur Durchführung einer Ausführungsform des Verfahrens zum Verstellen der Hinterkante eines Lastengleitschirms zeigt.

Die folgende detaillierte Beschreibung nimmt Bezug auf die beigefügten Zeichnungen, welche zur Erläuterung spezifische Details und Ausführungsformen zeigen, in welchem die Erfindung praktiziert werden kann.

Das Wort "beispielhaft" wird hierin verwendet mit der Bedeutung "als ein Beispiel, Fall oder Veranschaulichung dienend". Jede Ausführungsform oder Ausgestaltung, die hierin als "beispielhaft" beschrieben ist, ist nicht notwendigerweise als bevorzugt oder vorteilhaft gegenüber anderen Ausführungsformen oder Ausgestaltungen auszulegen.

In der folgenden ausführlichen Beschreibung wird auf die beigefügten Zeichnungen Bezug genommen, die Teil dieser bilden und in denen zur Veranschaulichung spezifische Ausführungsformen gezeigt sind, in denen die Erfindung ausgeübt werden kann. In dieser Hinsicht wird Richtungsterminologie wie etwa "oben", "unten", "vorne", "hinten", "vorderes", "hinteres", usw. mit Bezug auf die Orientierung der beschriebenen Figur(en) verwendet. Da Komponenten von Ausführungsformen in einer Anzahl verschiedener Orientierungen positioniert werden können, dient die Richtungsterminologie zur Veranschaulichung und ist auf keinerlei Weise einschränkend. Es versteht sich, dass andere Ausführungsformen benutzt und strukturelle oder logische Änderungen vorgenommen werden können, ohne von dem Schutzumfang der vorliegenden Erfindung abzuweichen. Es versteht sich, dass die Merkmale der hierin beschriebenen verschiedenen beispielhaften Ausführungsformen miteinander kombiniert werden können, sofern nicht spezifisch anders angegeben. Die folgende ausführliche Beschreibung ist deshalb nicht in einschränkendem Sinne aufzufassen, und der Schutzumfang der vorliegenden Erfindung wird durch die angefügten Ansprüche definiert.

Im Rahmen dieser Beschreibung werden die Begriffe "verbunden", "angeschlossen" sowie "gekoppelt" verwendet zum Beschreiben sowohl einer direkten als auch einer indirekten Verbindung, eines direkten oder indirekten Anschlusses sowie einer direkten oder indirekten Kopplung. In den Figuren werden identische oder ähnliche Elemente mit identischen Bezugszeichen versehen, soweit dies zweckmäßig ist.

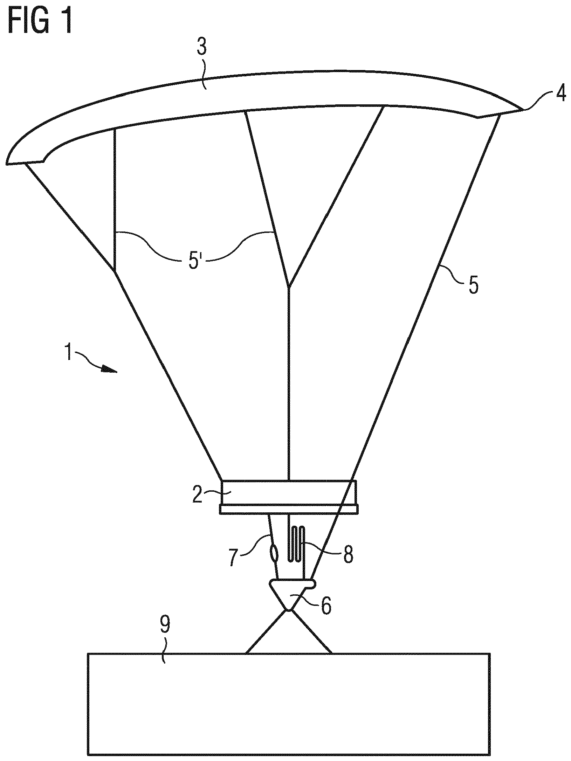

Figur 1 zeigt einen Lastengleitschirm 1 mit einem Tragesystem 2 gemäß einer Ausführungsform. Das Tragesystem 2 hängt über weitere Fangleinen 5' die die eigentliche Last tragen an einem Gleitschirm 3. Der Gleitschirm 3 ist in der dargestellten Ausführungsform ein Flächengleitschirm und weist eine Hinterkante 4 bzw. Hinterkantenklappe auf, mit deren Hilfe Abfangmanöver bzw. Flaremanöver durchgeführt werden können. An dem Tragesystem 2 ist eine Traglast 9 bzw. Nutzlast über eine Traglasteinheit 6 befestigt. Die Traglast 9 ist über Gurte oder Seile oder dergleichen an der Traglasteinheit 6 befestigt. Die Traglasteinheit 6 ist über einen ersten kurzen Lasttragegurt 7 und über einen zweiten längeren Lasttragegurt 8 mit dem Tragesystem 2 verbunden. In der dargestellten Ausführungsform wird die Traglast 9 über die Traglasteinheit 6 und über den ersten kurzen Lasttragegurt 7 getragen. Das gesamte Gewicht der Traglast 9 und der Traglasteinheit 6 wird über den ersten kurzen Lasttragegurt 7 gehalten. Die Hinterkante 4 des Gleitschirms 3 ist über eine Fangleine 5 bzw. Flareleine mit der Traglasteinheit 6 verbunden. Alternativ kann die Hinterkante 4, in einer nicht dargestellten Ausführungsform, auch über vorzugsweise mehrere Fangleinen mit dem Tragesystem 2 verbunden sein, wobei die von der Traglasteinheit 6 ausgehende Flareleine 5 mit diesen Fangleinen an einem oder mehreren Stellen beispielsweise über eine Kaskade verbunden ist. Die Hinterkante 4 des Gleitschirms 3 wird über einen Zug auf die mit der Traglasteinheit 6 verbundenen Flareleine 5 verstellt, indem die Flareleine 5 an den Fangleinen, die mit der Hinterkante 4 des Gleitschirms 3 verbunden sind, einen Zug ausübt.

Zur Durchführung eines Abfangmanövers kurz vor der Landung wird der erste kurze Lasttragegurt 7 durchtrennt bzw. abgetrennt und die Traglast 9 und die Traglasteinheit 6 fallen, bis sie durch den zweiten längeren Lasttragegurt 8 aufgefangen werden. Die Traglast 9 und die Traglasteinheit 6 hängen anschließend über den zweiten längeren Lasttragegurt 8 an dem Tragesystem 2. Durch die Vergrößerung des Abstands zwischen dem Tragesystem 2 und der Traglasteinheit 6 wird durch die Massenkraft der Traglast 9 und der Traglasteinheit 6 die Fangleine 5 bzw. Flareleine eingezogen, wodurch die Hinterkante 4 des Gleitschirms 3 mit nach unten gezogen wird. Das Profil des Gleitschirms 2 wird schlagartig verändert, wodurch Vertikal- und Horizontalgeschwindigkeit deutlich abnehmen. Dadurch wird eine sanfte Landung ermöglicht, wodurch die Nutzlast bzw. Traglast 9 sanft und vorzugsweise unbeschädigt abgesetzt werden kann.

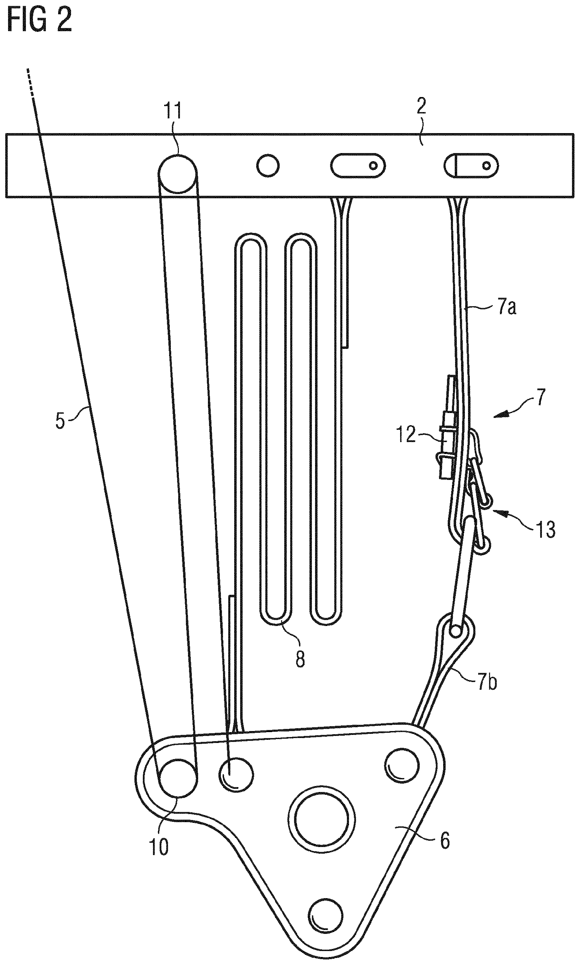

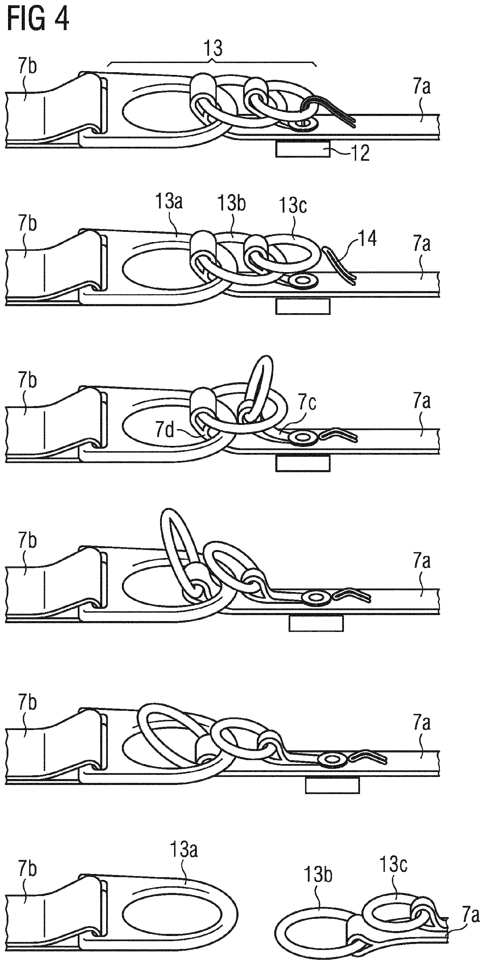

Figur 2 zeigt einen Ausschnitt einer Ausführungsform des Tragesystems 2. Eine Traglasteinheit 6 ist über einen ersten Lasttragegurt 7 und einen zweiten Lasttragegurt 8 mit dem Tragesystem 2 verbunden. In dem dargestellten Zustand der Ausführungsform des Tragesystems 2 besteht der erste kurze Lasttragegurt 7 aus zwei Abschnitten 7a und 7b, die über ein Dreiringsystem 13 miteinander verbunden sind. Zur Öffnung des Dreiringsystems 13 ist eine Trennvorrichtung 12 vorhanden. Erreicht der Gleitschirm eine bestimmte Sollhöhe über Grund, wird ein Signal an die Trennvorrichtung 12 gesandt und die Trennvorrichtung 12 entsichert das Dreiringsystem 13, so dass die beiden Abschnitte 7a und 7b des ersten Lasttragegurts 7 getrennt werden können. Das Öffnen des Dreiringsystems 13 ist in Figur 4 im Detail dargestellt und beschrieben. Alternativ kann die Trennung des ersten Lasttragegurts 7 an nahezu jeder beliebigen Stelle erfolgen. Beispielsweise kann die Trennung auch direkt an einer Befestigungsstelle an dem Tragesystem 2 oder der Traglasteinheit 6 erfolgen.

Die Traglasteinheit 6 ist weiter über einen zweiten längeren Lasttragegurt 8 mit dem Tragesystem 2 verbunden. Wird der erste Lasttragegurt 7 durch die Trennvorrichtung 12 getrennt, hängt die Traglasteinheit 6, mit einer daran verbundenen Traglast (nicht dargestellt), an dem zweiten längeren Lasttragegurt 8. Der Abstand zwischen der Traglasteinheit 6 und dem Tragesystem 2 wird auf die Länge des zweiten Lasttragegurts 8 vergrößert.

An der Traglasteinheit 6 ist eine Fangleine 5, bzw. Flareleine befestigt. Die Fangleine 5 verläuft in der dargestellten Ausführungsform des Tragesystems 2 von der Traglasteinheit 6 über eine erste Umlenkung 11 an dem Tragesystem 2 und über eine zweite Umlenkung 10 an der Traglasteinheit 6, und weiter zu der Hinterkante des Gleitschirms (nicht dargestellt).

Durch die Vergrößerung des Abstands zwischen der Traglasteinheit 6 und dem Tragesystem 2 auf die Länge des zweiten Lasttragegurts 8 wird gleichzeitig die Fangleine "eingezogen", so dass dadurch ein Zug auf die Hinterkante des Gleitschirms erfolgt. Da bei Trennung bzw. Abtrennung des ersten Lasttragegurts 7 der Abstand sehr rasch auf die Länge des zweiten Lasttragegurts 8 vergrößert wird, wird die zur Hinterkante des Gleitschirms führende Fangleine 5, bzw. Flareleine kurz vor der Landung innerhalb weniger Zehntelsekunden eingezogen. Durch das so schlagartig veränderte Profil des Gleitschirms nehmen Vertikal- und Horizontalgeschwindigkeit deutlich ab.

Durch die Umlenkungen 10 und 11 wird die eingezogene Länge der Fangleine 5 vervielfacht. Beispielsweise wird bei der dargestellten Ausführungsform mit zwei Umlenkungen 10 und 11 die eingezogene Länge nach dem Prinzip eines Flaschenzugs in etwa verdreifacht. Um eine größere Vervielfachung der eingezogenen Länge zu erreichen, können weitere Umlenkungen an dem Tragesystem 2 und/ oder der Traglasteinheit 6 vorgesehen sein (nicht dargestellt).

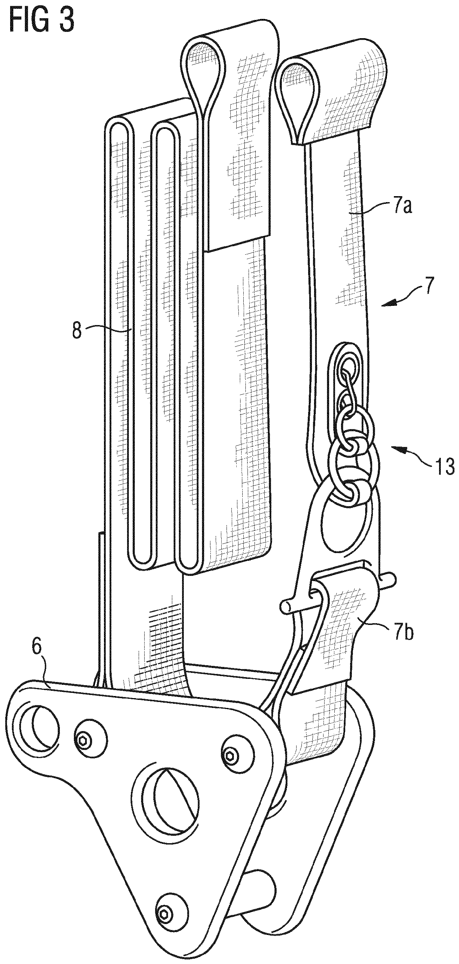

Figur 3 zeigt einen Ausschnitt einer weiteren Ausführungsform des Tragesystems 2. Bei der dargestellten Ausführungsform in 3D-Ansicht ist insbesondere die Anordnung des ersten Lasttragegurts 7 und des zweiten Lasttragegurts 8 an der Traglasteinheit 6 zu sehen. Der erste Lasttragegurt 7 ist in zwei Abschnitte 7a und 7b unterteilt, die über ein Dreiringsystem 13 miteinander verbunden sind. Zum Trennen der beiden Abschnitte 7a und 7b des ersten Lasttragegurts 7 wird das Dreiringsystem 13 geöffnet und die beiden Abschnitte 7a und 7b des ersten Lasttragegurts 7 können voneinander getrennt werden. Die Traglast (nicht dargestellt), die an der Traglasteinheit 6 befestigt ist, ist bis zur Trennung des ersten Lasttragegurts 7 durch diesen mit dem Tragesystem und dem Gleitschirm (nicht dargestellt) verbunden. Die gesamte Last wird über den ersten Lasttragegurt 7 getragen. Um den Flare auszulösen, ist der erste kurze Lasttragegurt 7 schnell und sicher zu trennen. Der erste Lasttragegurt 7 trägt im Moment der Auslösung die Nutzlast und ist einer entsprechenden Belastung ausgesetzt.

Nach Durchtrennung bzw. Trennung des ersten Lasttragegurts 7 "fällt" die Traglasteinheit 6, und mit ihr die Traglast, im freien Fall, bis sie durch den zweiten Lasttragegurt 8 aufgefangen wird. Anschließend hängt die Traglasteinheit 6 und die Traglast über den zweiten Lasttragegurt 8 an dem Tragesystem.

Figur 4 zeigt den Ablauf des Trennens eines Dreiringsystems 13. Die verschiedenen Ansichten der Figur 4 zeigen verschiedene Stadien der Trennung des Dreiringsystems 13.

Das Dreiringsystem 13 besteht aus drei miteinander kombinierten Ringen 13a, 13b, 13c, die unterschiedliche Größen aufweisen. Die Größen der Ringe 13a, 13b, 13c sind derart gewählt, dass jeweils ein Ring, z.B. der Ring 13b durch einen weiteren Ring 13a hindurchgeführt werden kann. Der Ring 13c passt hierbei durch den Ring 13b. Der Ring 13a ist mit einem ersten Ende 7b des Lasttragegurts 7 verbunden. Die beiden Ringe 13b und 13c sind jeweils über Gurtabschnitte 7c und 7d mit einem zweiten Ende 7a des Lasttragegurts 7 verbunden. Der kleinste Ring 13c ist mit einer Leine 14, einem Band, einem Kabel oder einem Stift oder dergleichen gesichert.

Zum Öffnen des Dreiringsystems 13 wird die Leine 14 mittels eine Trennvorrichtung 12 durchtrennt bzw. gelöst, so dass der kleinste Ring 13c, auf Grund der Massenkraft, die an dem Lasttragegurt 7 anliegt, durch den etwas größeren Ring 13b hindurchgeführt werden kann. Der kleinste Ring 13c ist über einen Gurtabschnitt 7c des Lasttragegurts 7a durch den größeren Ring 13b geführt. Der Gurtabschnitt 7c sichert den zweiten Ring 13b vor dem herausrutschen aus dem größten Ring 13c. Der größte Ring 13a ist über den Gurtabschnitt 7d, an dem der zweite Ring 13b befestigt ist gesichert. Durch das Lösen des kleinsten Rings 13c rutscht dieser durch den zweiten Ring 13b durch, wodurch der zweite Ring 13b durch den größten Ring 13a rutschen kann und die Trennung des ersten Lasttragegurtabschnitts 7a von dem zweiten Lasttragegurtabschnitt 7b erfolgt.

Zur Trennung der haltenden Leine 14 oder eines Bandes, eines Kabel, eines Dahtes, eines Stifts oder dergleichen ist eine Trennvorrichtung 12 vorgesehen. Dies erhält bei Erreichen einer bestimmten Sollhöhe ein Signal und durchtrennt die Leine 14, der das Dreiringsystem 13 sichert. Als Trennvorrichtung 12 kann beispielsweise ein sogenannter Cutter eingesetzt werden. Ein Cutter ist eine pyrotechnische Trennvorrichtung. In einer Ausführungsform kann beispielsweise in einem Rohr eine Treibladung elektrisch durch ein Signal von dem Tragesystem gezündet werden. Die Treibladung schießt einen Schneidbolzen gegen einen Amboss oder ein vergleichbares Gegenstück und durchtrennt dabei das dazwischen angeordnete Kabel oder den Draht (nicht dargestellt).

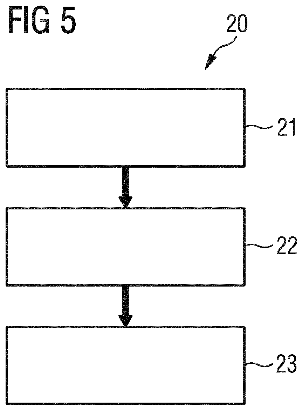

Figur 5 zeigt ein Ablaufdiagramm 20 zur Durchführung einer Ausführungsform des Verfahrens zum Verstellen der Hinterkante eines Lastengleitschirms. In einem ersten Schritt 21 wird der erste kurze Lasttragegurt durchtrennt. In einem weiteren Schritt 22 wird die Hinterkante zur Durchführung des Manövers durch die Massenkraft der Traglast verstellt. In Schritt 23 wird die Traglast über den längeren zweiten Lasttragegurt getragen.

Hierbei wird durch die Trennung des ersten kurzen Lasttragegurts der Abstand zwischen dem Tragesystem und der Traglasteinheit auf die Länge des zweiten längeren Lasttragegurts vergrößert. Die Fangleine verläuft gemäß einer Ausführungsform über mindestens eine Umlenkung an der Traglasteinheit. Gemäß einer weiteren Ausführungsform verläuft die Fangleine über mindestens eine Umlenkung an dem Tragesystem. Gemäß einer Ausführungsform wird der erste kurze Lasttragegurts mittels einer gesteuerten Trennvorrichtung getrennt.

Dem zuvor beschrieben Tragesystem liegt der Gedanke zugrunde, zur Durchführung eines Abfangmanövers die für den Zug auf die Hinterkante des Gleitschirms aufzubringende Zugkraft über die Lastkraft der an dem Gleitschirm hängenden Traglast durchzuführen, wobei das erfindungsgemäße Tragesystem mit der Traglast über zwei Gurte verbunden ist. Ein kurzer Gurt trägt die Traglast währende des Zeitraums des Sinkfluges. Zur Durchführung des Abfangmanövers wird der erste Gurt durchtrennt bzw. abgetrennt und die Traglast wird über einen längeren Gurt getragen. Durch die Vergrößerung des Abstands zwischen dem Tragesystem und der Traglast wird gleichzeitig über eine Flarleine eine Zugkraft auf die Hinterkante des Gleitschirms ausgeübt um den Gleitschirm für eine sanfte Landung abzufangen.

Obwohl die Erfindung vor allem unter Bezugnahme auf bestimmte Ausführungsformen gezeigt und beschrieben worden ist, sollte von denjenigen, die mit dem Fachgebiet vertraut sind, verstanden werden, dass zahlreiche Änderungen bezüglich Ausgestaltung und Details daran vorgenommen werden können, ohne vom Bereich der Erfindung, wie durch die angefügten Ansprüche definiert, abzuweichen. Der Bereich der Erfindung wird somit durch die angefügten Ansprüche bestimmt, und es ist daher beabsichtigt, dass sämtliche Änderungen, welche unter den Wortsinn der Ansprüche fallen, umfasst werden.

### Bezugszeichenliste

- 1: Lastengleitschirm
- 2: Tragesystem
- 3: Gleitschirm
- 4: Hinterkante
- 5: Fangleine bzw. Flareleine
- 5': Fangleine
- 6: Traglasteinheit
- 7: erste Lasttragegurt
- 7a, 7b, 7c, 7d: Abschnitte des ersten Lasttragegurts
- 8: zweiter Lasttragegurt
- 9: Traglast
- 10: Umlenkung
- 11: Umlenkung
- 12: Trennvorrichtung
- 13: Dreiringsystem
- 13a, 13b, 13c: Ringe des Dreiringsystems
- 14: Leine
- 20: Ablaufdiagramm
- 21: erster Schritt
- 22: zweiter Schritt
- 23: dritter Schritt

## Patentansprüche

1. Tragesystem für das Tragen einer Traglast (9) mittels eines Lastengleitschirms (1) mit einem über Fangleinen (5') mit dem Tragesystem verbindbaren Schirm (3) mit Hinterkante (4), wobei an dieser zur Durchführung von Abfangmanövern mindestens eine Fang- bzw. Flareleine (5) befestigt ist; **dadurch gekennzeichnet, dass** das Tragesystem aufweist:
einen mit den Fangleinen (5') verbindbaren Träger (2);
mindestens eine mit der Traglast (9) verbindbare Traglasteinheit (6); und
einen ersten kurzen Lasttragegurt (7) und einen zweiten längeren Lasttragegurt (8), die jeweils die Traglasteinheit (6) mit dem Träger (2)verbinden und derart ausgelegt sind, dass bei Gleitsituationen außerhalb von Abfangmanövern das Tragen einer mit der Traglasteinheit (6) verbundenen Traglast (9) über den ersten kurzen Lasttragegurt (7) erfolgt;
wobei die Fang- bzw. Flareleine (5) mit der Traglasteinheit (6) derart verbindbar ist, dass die Fang- bzw. Flareleine (5) zur Durchführung eines Abfangmanövers das Verstellen der Hinterkante (4) durch die Massenkraft der Traglast (9) bewirkt, indem eine Trennung des ersten kurzen Lasttragegurts (7) erfolgt und das Tragen der Traglast (9) über den längeren zweiten Lasttragegurt (8) erfolgt.

2. Tragesystem gemäß Anspruch 1,
wobei durch die Trennung des ersten kurzen Lasttragegurts (7) der Abstand zwischen dem Träger (2) und der Traglasteinheit (6) auf die Länge des zweiten längeren Lasttragegurts (8) vergrößert ist.

3. Tragesystem gemäß einem der vorherstehenden Ansprüche,
wobei die mindestens eine Fang- bzw. Flareleine (5) über mindestens eine Umlenkung (10) an der Traglasteinheit (6) verläuft.

4. Tragesystem gemäß einem der vorherstehenden Ansprüche,
wobei die mindestens eine Fang- bzw. Flareleine (5) über mindestens eine Umlenkung (11) an dem Träger (2) verläuft.

5. Tragesystem gemäß einem der vorherstehenden Ansprüche,
wobei die Trennung des ersten kurzen Lasttragegurts (7) mittels einer gesteuerten Trennvorrichtung (12) erfolgt.

6. Tragesystem gemäß Anspruch 5,
wobei die Trennvorrichtung (12) ein Cutter ist.

7. Tragesystem gemäß einem der vorherstehenden Ansprüche,
wobei der erste kurze Lasttragegurt (7) ein Mehrringtrennsystem (13) aufweist.

8. Tragesystem gemäß einem der vorherstehenden Ansprüche,
wobei das Mehrringtrennsystem (13) ein Dreiringsystem ist.

9. Tragesystem gemäß einem der vorherstehenden Ansprüche,
wobei das Tragesystem mindestens eine Vorrichtung zur Durchführung von Kurvenflug-Manövern aufweist.

10. Tragesystem gemäß einem der vorherstehenden Ansprüche, aufweisend einen Höhensensor zur Messung der momentanen Flughöhe.

11. Verfahren (20) zum Verstellen der Hinterkante (4) eines Lastengleitschirms (1) zur Durchführung eines Abfangmanövers, mit mindestens einer Traglasteinheit (6), die über einen ersten kurzen Lasttragegurt (7) und einen zweiten längeren Lasttragegurt (8) mit einem Träger (2) des Lastengleitschirms (1) verbunden ist und wobei an diesem mindestens eine Fang- bzw. Flareleine (5) des Lastengleitschirms (1) befestigt ist, aufweisend die Schritte:
Trennen (21) des ersten kurzen Lasttragegurts (7);
Verstellen (22) der Hinterkante zur Durchführung des Manövers durch die Massenkraft der Traglast (9); und
Tragen (23) der Traglast (9) über den längeren zweiten Lasttragegurt (8).

12. Verfahren nach Anspruch 11,
wobei durch die Trennung (21) des ersten kurzen Lasttragegurts (7) der Abstand zwischen dem Tragesystem (2) und der Traglasteinheit (6) auf die Länge des zweiten längeren Lasttragegurts (8) vergrößert wird.

13. Verfahren nach einem der Ansprüche 11 oder 12,
wobei die Fang- bzw. Flareleine (5) über mindestens eine Umlenkung (10) an der Traglasteinheit (6) verläuft.

14. Verfahren nach einem der Ansprüche 11 bis 13,
wobei die Fang- bzw. Flareleine (5) über mindestens eine Umlenkung (10) an dem Tragesystem (2) verläuft.

15. Verfahren nach einem der Ansprüche 11 bis 14,
wobei der erste kurze Lasttragegurts (7) mittels einer gesteuerten Trennvorrichtung (12) getrennt wird.

## Claims

1. Carrier system for carrying a carried load (9) by means of a loadbearing paraglider (1) comprising a wing (3) which can be connected to the support system via suspension lines (5') and which has a trailing edge (4), at least one suspension line or flare line (5) being fixed to said trailing edge for carrying out interception manoeuvres; **characterised in that** the carrier system comprises:
a carrier (2) connectable to the suspension lines (5');
at least one carried load unit (6) connectable to the carried load (9); and
a first, short load carrier belt (7) and a second, longer load carrier belt (8), which each connect the carried load unit (6) to the carrier (2) and are configured in such a way that, in gliding situations other than interception manoeuvres, a carried load (9) connected to the carried load unit (6) is carried is carried via the first, short load carrier belt (7);
the suspension line or flare line (5) being connectable to the load carrier unit (6) in such a way that the suspension line or flare line (5) causes the trailing edge (4) to be adjusted using the gravitational force of the carried load (9) to carry out an interception manoeuvre, **in that** the first short load carrier belt (7) is separated and the carried load (9) is carried via the longer, second load carrier belt (8).

2. Carrier system according to claim 1, wherein separating the first, short load carrier belt (7) increases the distance between the carrier (2) and the carried load unit (6) to the length of the second, longer load carrier belt (8).

3. Carrier system according to either of the preceding claims, wherein the at least one suspension line or flare line (5) extends over at least one deflector (10) on the carried load unit (6).

4. Carrier system according to any of the preceding claims, wherein the at least one suspension line or flare line (5) extends over at least one deflector (11) on the carrier (2).

5. Carrier system according to any of the preceding claims, wherein the first, short load carrier belt (7) is separated by means of a controlled separator device (12).

6. Carrier system according to claim 5, wherein the separator device (12) is a cutter.

7. Carrier system according to any of the preceding claims, wherein the first, short load carrier belt (7) comprises a multi-ring separator system (13).

8. Carrier system according to any of the preceding claims, wherein the multi-ring separator system (13) is a three-ring system.

9. Carrier system according to any of the preceding claims, wherein the carrier system comprises at least one device for carrying out spiralling manoeuvres.

10. Carrier system according to any of the preceding claims, comprising a height sensor for measuring the current altitude.

11. Method (20) for adjusting a trailing edge (4) of a loadbearing paraglider (1) for carrying out an interception manoeuvre, using at least one carried load unit (6) connected via a first, short load carrier belt (7) and a second, longer load carrier belt (8) to a carrier (2) of the loadbearing paraglider (1), and wherein at least one suspension line or flare line (5) of the loadbearing paraglider (1) is fixed to said carrier, comprising the steps of:
separating (21) the first, short load carrier belt (7);
adjusting (22) the trailing edge to carry out the manoeuvre using the gravitational force of the carried load (9); and
carrying (23) the carried load (9) by means of the longer, second load carrier belt (8).

12. Method according to claim 11,
wherein separating (21) the first, short load carrier belt (7) increases the distance between the carrier system (2) and the carried load unit (6) to the length of the second, longer load carrier belt (8).

13. Method according to either claim 11 or claim 12, wherein the suspension line or flare line (5) extends over at least one deflector (10) on the carried load unit (6).

14. Method according to any of claims 11 to 13, wherein the suspension line or flare line (5) extends over at least one deflector (10) on the carrier system (2).

15. Method according to any of claims 11 to 14, wherein the first, short load carrier belt (7) is separated by means of a controlled separator device (12).

## Revendications

1. Système de support destiné à porter une charge (9) au moyen d'un parachute de largage (1) comprenant une voile (3) pouvant être reliée au système de support par le biais de suspentes (5') et dotée d'une arête arrière (4), au moins une suspente ou cordon d'arrondi (5) étant fixée à cette dernière pour exécuter des manoeuvres d'arrondi ; **caractérisé en ce que** le système de support comporte :
un élément porteur (2) pouvant être relié aux suspentes (5') ;
au moins une unité de charge (6) pouvant être reliée à la charge (9) ; et
une première sangle courte de support de charge (7) et une seconde sangle plus longue de support de charge (8), qui relient respectivement l'unité de charge (6) à l'élément porteur (2) et sont conçues de telle manière qu'en situation de planement en dehors de manoeuvres d'arrondi, le support d'une charge (9) reliée à l'unité de charge (6) est effectué par le biais de la première sangle courte de support de charge (7) ;
la suspente ou corde d'arrondi (5) pouvant être reliée à l'unité de charge (6) de telle manière que la suspente ou corde d'arrondi (5) induit le réglage de l'arête arrière (4) par la force inertielle de la charge (9) pour exécuter une manoeuvre d'arrondi, **en ce qu'**une séparation de la première sangle courte de support de charge (7) est effectuée et que le support de la charge (9) est effectué par le biais de la seconde sangle plus longue de support de charge (8).

2. Système de support selon la revendication 1,
dans lequel la séparation de la première sangle courte de support de charge (7) entraîne l'augmentation de la distance entre l'élément porteur (2) et l'unité de charge (6) à la longueur de la seconde sangle plus longue de support de charge (8).

3. Système de support selon l'une des revendications précédentes,
dans lequel l'au moins une suspente ou corde d'arrondi (5) passe par au moins un renvoi (10) sur l'unité de charge (6).

4. Système de support selon l'une des revendications précédentes,
dans lequel l'au moins une suspente ou corde d'arrondi (5) passe par au moins un renvoi (11) sur l'élément porteur (2).

5. Système de support selon l'une des revendications précédentes,
dans lequel la séparation de la première sangle courte de support de charge (7) est effectuée au moyen d'un dispositif de séparation (12) commandé.

6. ystème de support selon la revendication 5,
dans lequel le dispositif de séparation (12) est un cutter.

7. Système de support selon l'une des revendications précédentes,
dans lequel la première sangle courte de support de charge (7) comporte un système de séparation multi-anneaux (13).

8. Système de support selon l'une des revendications précédentes,
dans lequel le système de séparation multi-anneaux (13) est un système trois anneaux.

9. Système de support selon l'une des revendications précédentes,
dans lequel le système de support comporte au moins un dispositif destiné à exécuter des manoeuvres de virage.

10. Système de support selon l'une des revendications précédentes,
comportant un capteur d'altitude pour mesurer l'altitude de vol actuelle.

11. Procédé (20) de réglage de l'arête arrière (4) d'un parachute de largage (1) pour exécuter une manoeuvre d'arrondi, comprenant au moins une unité de charge (6), qui est reliée à un élément porteur (2) du parachute de largage (1) par le biais d'une première sangle courte de support de charge (7) et d'une seconde sangle plus longue de support de charge (8) et au moins une suspente ou corde d'arrondi (5) du parachute de largage (1) étant fixée audit élément porteur, comportant les étampes :
séparation (21) de la première sangle courte de support de charge (7) ;
réglage (22) de l'arête arrière pour exécuter la manoeuvre au moyen de la force inertielle de la charge (9) ; et
support (23) de la charge (9) par le biais de la seconde sangle plus longue de support de charge (8).

12. Procédé selon la revendication 11,
dans lequel la séparation (21) de la première sangle courte de support de charge (7) entraîne l'augmentation de la distance entre le système de support (2) et l'unité de charge (6) à la longueur de la seconde sangle plus longue de support de charge (8).

13. Procédé selon l'une des revendications 11 ou 12,
dans lequel la suspente ou corde d'arrondi (5) passe par au moins un renvoi (10) sur l'unité de charge (6).

14. rocédé selon l'une des revendications 11 à 13,
dans lequel la suspente ou corde d'arrondi (5) passe par au moins un renvoi (10) sur le système de support (2).

15. Procédé selon l'une des revendications 11 à 14,
dans lequel la première sangle courte de support de charge (7) est séparée au moyen d'un dispositif de séparation (12) commandé.
